# EUROPEAN PATENT SPECIFICATION

(11) **EP 4 096 995 B1**
(45) Date of publication and mention of the grant of the patent: **13.08.2025**
(21) Application number: 21703538.5
(22) Date of filing: 29.01.2021
(51) Int. Cl.: B62K 25/00, B60B 1/00, B60B 27/02, B60B 5/02, B60B 1/06, B29C 45/00, B60B 1/02

(54) **BICYCLE WITH CANTILEVERED SINGLE SIDE MOUNTED WHEELS**
FAHRRAD MIT FREITRAGENDEN, EINSEITIG MONTIERTEN RÄDERN
BICYCLETTE AVEC DES ROUES EN PORTE-À-FAUX MONTÉES D'UN SEUL CÔTÉ

(30) Priority: 29.01.2020 GB 202001248
(43) Date of publication of application: 07.12.2022
(73) Proprietor: Karbon Kinetics Limited, Chessington, Surrey KT9 2NY (GB)
(72) Inventor: THORPE, Richard, Surrey KT9 2NY (GB)
(74) Representative: Potter Clarkson
(86) International application number: PCT/GB2021/050211
(87) International publication number: WO 2021/152324

(56) References cited:
- EP-A1- 3 299 271
- WO-A1-2006/108278
- WO-A1-2018/073005
- WO-A1-2019/113701
- WO-A1-92/01573
- WO-A1-95/04666
- DE-A1- 4 444 044
- DE-C2- 4 444 044
- JP-A- H02 249 701
- US-A- 5 246 275
- US-A- 5 415 463
- US-A1- 2007 222 275
- US-A1- 2007 222 275

## Description

### FIELD OF THE INVENTION

The invention relates generally to bicycle wheels, and more particularly to single side mounted bicycle wheels.

### BACKGROUND OF THE INVENTION

The wheels on the vast majority of current state of the art bicycles are attached to the bicycle frame with two fixing points. Traditional bicycle wheels are attached at these two points, which are generally on either side of the wheel central plane and usually involve fasteners that connect an axle of the wheel hub rigidly to a rear or front forked frame member.

While these double side mounted traditional bicycle wheels have many benefits, such as low manufacturing cost, light weight, sturdy construction, standardized manufacturing and maintenance, they also have significant drawbacks. In order to effectively access the tyre and inner tube, or replace a tyre and inner tube (such as in the case of fixing a flat tyre), the wheel must be detached entirely from the bicycle frame and chain. Detaching the front wheel on a double side mounted traditional wheel bicycle frame is relatively straight forward using a so-called "quick release" skewer and usually does not involve getting grease on the user's hands.

However, detaching the rear wheel of a dual side mounted traditional wheel bicycle is usually a much more complex, messy, and cumbersome operation resulting in soiling of the user's hands or clothing with oil or dirt from the rear derailleur gearing and chain system. There is the added complication of ensuring the braking system is released prior to removing the wheel and then readjusted safely after the wheel is re-fitted to the frame. On dual side mounted traditional wheel bicycle frames that employ a rear wheel bicycle planetary style multi speed gear hub there is the added complication of the user needing to adjust the chain or belt tension usually with so-called "horizontal rear dropouts" or an eccentric bottom bracket adjustment arrangement.

A further disadvantage of dual side mounted wheel frame designs is apparent when fitted to folding type bicycles that have folding hinge mechanisms that position the front and the rear wheel in a co-axial configuration when folded. The dual side mounted wheel frame increases the width of the folded bicycle across the folded wheel axis making the folded bicycle package envelop larger and more bulky which is un-desirable.

A minority of specialised bicycles such as the Strida, Gocycle, IF Move, and Mando Footloose have pioneered the use of single side mounted wheels. These single side mounted wheel bicycle designs have the unique benefit of enabling the rider to remove the tyre from the wheel without having to remove the wheel from the bicycle.

Single side mounted wheel designs vary significantly between different current state of the art single side mounted wheel bicycles. The differences relate to materials choice, combination of materials in construction, shape and structure.

For example, some single side mounted bicycle wheel designs employ traditional bicycle technology such as triangulated wire spokes connecting a metal rim in tension to a central hub which is then fitted to bearings and an oversized axle that is mated to the bicycle frame on one side in a cantilevered arrangement.

The drawback of this design is that the wire spoke arrangement is relatively wide due to the need for the spokes to be triangulated and provide equal tension on each side of the central plane of the rim. This width is not desirable when it comes to folding bike designs or designs that use disk brakes due to the fact that the calliper of the disk brake must be mounted in close proximity to the central rotating axis of the wheel, which is where the wire spoked wheels are at the widest point. The disk brake calliper must have sufficient clearance with the rotating spokes and therefore additional width is required in the entire disk brake calliper wheel mounting arrangement.

An additional drawback of wire spoke single side mounted wheel designs is that the spokes can attract dirt and grease during riding and are difficult to clean due to their intricate nature and the high number of spokes. Wire spoke wheels also can require regular maintenance to ensure the spoke tension is consistent and the wheel runs true.

In the case of other single side mounted wheel designs, the side mounted wheel is made from a material such as fibre reinforced plastic, or resin and glass or carbon matrix, or aluminium or magnesium, and through an injection moulded or cast or forged or vacuum or pressure formed composite manufacturing process. These designs have spokes that are curved and formed or connected to the rim and hub such that the hub or area that connects the wheel to the bicycle is generally offset to one side of the central plane of the wheel.

The fixing arrangement of these single side mounted wheels is similar to that of an automobile and is usually in the form of a number of hub mounting bolts that connect the wheel to a rotatable hub, disk brake, and stub axle assembly. The advantage of these curved and offset from wheel centreline spokes is that the offset nature of the spokes provide more room for disk brake callipers and therefore results in a more compact mounting arrangement for the wheel and hub. These cantilevered single side mounted wheels also can have improved aerodynamics compared with wire spoked wheels and are easier to clean than wire spoke wheels due to their smooth shape and fewer number of spokes.

However, current state of the art cantilevered single side wheels have some disadvantages. Generally the materials and processes used to create the shape can result in either a wheel that is heavy or a wheel that is expensive or a wheel that is not strong enough or stiff enough for safety and performance.

In the case of magnesium or aluminium cast or forged designs and construction, the metal requires painting which adds weight and cost and can be problematic with regard to surface finish due to porosity in the base metal.

In the case of plastic injection moulded wheels, whilst they do not require paint, and the manufacturing process can be very low cost, the materials used lack sufficient stiffness and strength for the required weight and therefore the wheels tend to be too heavy if they are strong enough to meet safety requirements.

Significant challenges exist with injection moulded rims that are made from glass reinforced plastic materials, in particular when fitted with high pressure tyres or the user inflates the tyre to a pressure higher than the rim is rated. These rims can fail catastrophically if not designed correctly and generally require substantial reinforcement with extra material which adds weight.

Some designs have attempted to overcome the challenges of high pressure tyres fitted to plastic injection moulded rims by using a traditional metal extruded rim that is either bolted or glued or joined to an injection moulded plastic spoke and hub sub assembly. The drawback of this approach is generally higher cost and higher weight and also the complexity and durability of joining dissimilar materials together, as well as long term reliability.

Both of these material and manufacturing process designs are limited by the fact that the rim and the spokes are not able to employ hollow box cross sections that can reduce stress in the material and increase stiffness without adding weight. Generally available automated injection moulding, forging, or castings manufacturing processes only allow designs that employ "U" channel or "I beam" channel cross sections (for example no hollow cross sections are possible) which are substantially less efficient in specific strength and stiffness than a hollow box section arrangement.

When it comes to carbon or glass composite construction wheels, a box section arrangement can be employed with the inner core being filled with either air or a foam or metal matrix core that is bonded to the outer carbon or glass fibre walls. This provides a very strong, stiff, and lightweight wheel, but with a significantly higher price. This high price is due to the complex construction methods, high material costs for composite fibres, and the multi piece construction.

A bicycle wheel failing can lead to serious injury or death, and bicycle wheels must therefore be built to withstand extreme conditions such as over inflation of pneumatic tyre, or being stored in very hot or very cold conditions (for example in a car on a hot day or outside in the snow). The moulding process and particular geometry of a wheel can change the properties of the material of the wheel, such as the strength and rigidity etc., and manufacturers therefore prefer to stick to tried and tested methods in order to reduce the risk of failure.

US 5,415,463 A discloses a hollow-form bicycle wheel formed by injection molding of plastic. The wheel has an integral, central sleeve to receive a wheel hub assembly, at least three, hollow-form, integral spokes that are symmetrically located at equal angular spacings about the hub, and an integrally formed peripheral annulus which is jointed to an independently formed annular rim having a peripheral channel to receive a tire.

### SUMMARY OF THE INVENTION

According to a first aspect of the invention, there is an injection moulded cantilevered single side mountable wheel for a bicycle, comprising a rim, a central hub; a plurality of hollow spokes connecting the outer rim to the central hub; and, a central spar running symmetrically within each hollow spoke and perpendicular in plane to the plane defined by the centreline of the rim.

The central spar helps to stabilise the spoke during cooling in the moulding process as well as stabilising the outer shape of the spoke in order to raise the lateral stiffness of the wheel.

A single side mountable wheel is a wheel that is mountable only from a single side.

Preferably, the central hub is offset from a plane defined by a centreline of the outer rim.

Traditional injection moulding techniques cannot be used to create hollow structures such as hollow spokes, and such a design therefore goes against conventional injection moulded designs.

There exists a relatively new manufacturing process known as the "lost core" or "soluble core" process. This process is based on low cost and highly efficient injection moulding but allows for internal hollow structures such as hollow spokes to be employed. The central solid "lost core", usually a metal, is usually removed by dissolving it to liquid and draining it out of the component after the injection moulding process.

Because the final component has a hollow "box" section structure, the wheel is substantially more efficient in terms of specific strength and stiffness compared to traditional injection moulded single side mounted wheels, which leads to a light weight structure that is cost viable to produce.

Creating a single side mounted wheel using the lost core process is particularly challenging, as having the central hub offset from the plane defined by the centreline of the rim (i.e. the location where the spokes connect to the central hub is offset from the plane in which the centreline of the rim of the wheel is located) leads to the wheel being asymmetric, and the temperature variations during the moulding process mean that there is a risk of the wheel shrinking in a non-symmetrical manner and/or deforming and/or warping. Using the lost core process for a cantilevered single side mounted wheel with non-symmetrical geometry and shape has therefore not previously been considered. Such a wheel design may typically be used when a disk brake is used instead of calliper style brakes. The use of calliper style brakes that contact the rim of the wheel to impart braking force is often avoided for previous forms of injection moulded wheels due to the detrimental effect the calliper brakes have on the rim material from which the wheel is made, which is primarily caused by heating during braking.

The wheel may also be used for other vehicles, such as scooters, tricycles or for four-wheeled vehicles using wheels typically used or usable with bicycles.

Preferably, the rim comprises a hollow cross section. By the term "rim" we intend to mean the wheel rim that is typically supported by the spokes. There may be additional features extending further outward from the hub than the outer rim, such as a wheel frame and/or tyre. As such, the rim may also be referred to as the outer rim or wheel rim.

Preferably, the wheel is arranged to receive a pneumatic tyre.

The wheel may have a hub at its radial centre, and the hub may be mountable to an axle or may provide an axle. The hub may have a surface providing an inner wheel hub surface. The inner wheel hub surface may provide a ring, such as a ring arranged to engage an axle in use. Preferably, an inner wheel hub surface of the wheel comprises a plurality of inner drain holes. More preferably, each inner drain hole of the plurality of inner drain holes is substantially aligned with an innermost end of a respective one of the plurality of hollow spokes.

Preferably, an outer surface of the rim comprises a plurality of outer drain holes. More preferably, each outer drain hole of the plurality of outer drain holes is substantially aligned with an outermost end of a respective one of the plurality of hollow spokes.

The outer surface of the rim may be a wheel rim tube contact surface. The strategically positioned and shaped holes (such as the inner drain holes and/or the outer drain holes) enable the "lost core" to be dissolved and drained out of the wheel after injection moulding.

Preferably, each outer drain hole of the plurality of outer drain holes comprises a surrounding reinforcement region.

Preferably, a linear size of the reinforcement region is between 2.0 and 4.0 times larger than a linear size of the respective outer drain hole, preferably between 2.0 and 3.0 times larger, most preferably 2.5 times larger.

The linear size refers to the width and length of the outer drain holes. For example, the length and width of each reinforcement region are preferably both between 2.0 and 3.0 times larger than the length and width respectively of the outer drain holes, and most preferably 2.5 times larger.

Preferably, the outer drain holes are (substantially) elliptic; wherein a width of each outer drain hole is between 6 mm and 10 mm, preferably between 7 mm and 9 mm, and most preferably 8 mm; and wherein a length of each outer drain hole is between 16 mm and 24 mm, preferably between 18 mm and 22 mm, and most preferably 20 mm.

Optionally, the width of each outer drain hole is about 8 mm and the length of each outer drain hole is about 20 mm.

The relatively high air pressure of pneumatic tyres creates extreme stresses on the outer surface of the rim. The reinforcements around the drain holes and the valve stem hole distribute stresses evenly and allow for the use of low cost materials such as 15% glass filled nylon 66. Such issues would not be considered for non-pneumatic tyres such as solid rubber tyres, as the stresses created by the tyre are much lower and are subject to less variation (such as due to a user overfilling a pneumatic tyre or the tyre pressure changing due to temperature or altitude).

Preferably, the wheel further comprises a tyre valve stem hole in the outer surface of the rim configured to receive a tyre valve stem.

Preferably, the tyre valve stem hole comprises a surrounding reinforcement region.

Preferably, each reinforcement region is between 1.5 and 3 times thicker than a nominal thickness of the outer surface, preferably between 2.0 and 3.0 times thicker, most preferably 2.5 times thicker.

Preferably, the nominal thickness of the outer surface is between 1.5 mm and 3.5 mm, preferably between 1.9 mm and 3.1 mm, more preferably between 1.9 mm and 2.1 mm, and most preferably 2.0 mm. By the phrase "nominal thickness" we intend to mean the typical thickness of material from which the wheel is made where no thickening is applied, such as due to deliberate thickening or at corners or locations with increased curvature where the thickness may increase, such locations where thickening does not occur may be on the side of the rim and in a middle portion of each spoke.

Optionally, the wheel comprises a hub interface surface arranged to abut against a bicycle when the wheel is mounted to the bicycle, and wherein the abutment surface is offset from a plane defined by the centreline of the rim.

Optionally, an axis of each hollow spoke extending along the length of each spoke is curved. This axis may be a radial axis relative to the wheel (although potentially orientated at an angle to the plane in which the rim is located)

The offset hub interface surface and curved spokes allow more space for disc brakes.

Optionally, a cross sectional area of each hollow spoke decreases smoothly in a direction radially outwardly from the centre of the wheel.

Optionally, the wheel further comprises a conical centre wheel hub coaxial with the centre of rotation of the wheel.

Preferably, a diameter of the wheel is less than 500 mm.

Preferably, a diameter of the wheel is greater than 300 mm.

Preferably, a hub of the wheel comprises a plurality of through holes parallel to a central rotation axis of the wheel arranged to receive a respective plurality of bolts.

Preferably, the wheel is a lost core injection moulded single side mounted wheel or a soluble core injection moulded single side mounted wheel.

Preferably, the wheel is made of glass filled nylon. For example, the wheel could be made of (approximately) 15% glass filed nylon 66. Of course, other percentages of glass filling and other types of nylon could also be used.

Preferably, the wheel is formed of a homogeneous material.

Optionally, the wheel may comprise five hollow spokes, six hollow spokes, or more than six hollow spokes.

According to a second aspect of the invention, there is a bicycle comprising the wheel of the first aspect.

Preferably, the wheel is mounted to the bicycle with a plurality of bolts and a wheel hub collar. The wheel hub collar may also be referred to as an axle.

The wheel hub collar reduces material stress by spreading the compression loading from the bolts evenly across the wheel.

Preferably, the bicycle further comprises a pneumatic tyre mounted to the wheel.

### BRIEF DESCRIPTION OF THE DRAWINGS

Examples of the present invention will now be described in detail with reference to the accompanying drawings, in which:
Figure 1 shows a side view of a bicycle with cantilevered single side mounted wheels;
Figure 2 is a perspective view of the rear cantilevered single side mounted wheel fitted to the bicycle;
Figure 3 shows a perspective view of the cantilevered single side mounted wheel showing a cutaway section through a spoke and the rim of the cantilevered single side mounted wheel from Figure 2;
Figure 4 is a vertical cross section view showing the cantilevered single side mounted wheel mounted to a front wheel hub and front fork shaft assembly of the bicycle; and
Figure 5 shows an example of a spoke having central spar.

### DETAILED DESCRIPTION OF THE INVENTION

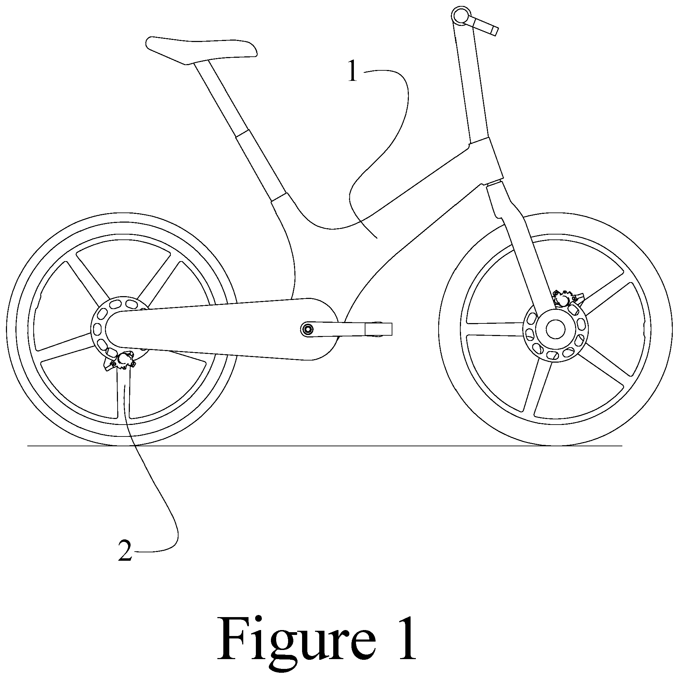

Figure 1 shows a bicycle with a cantilevered single side mounted wheel.

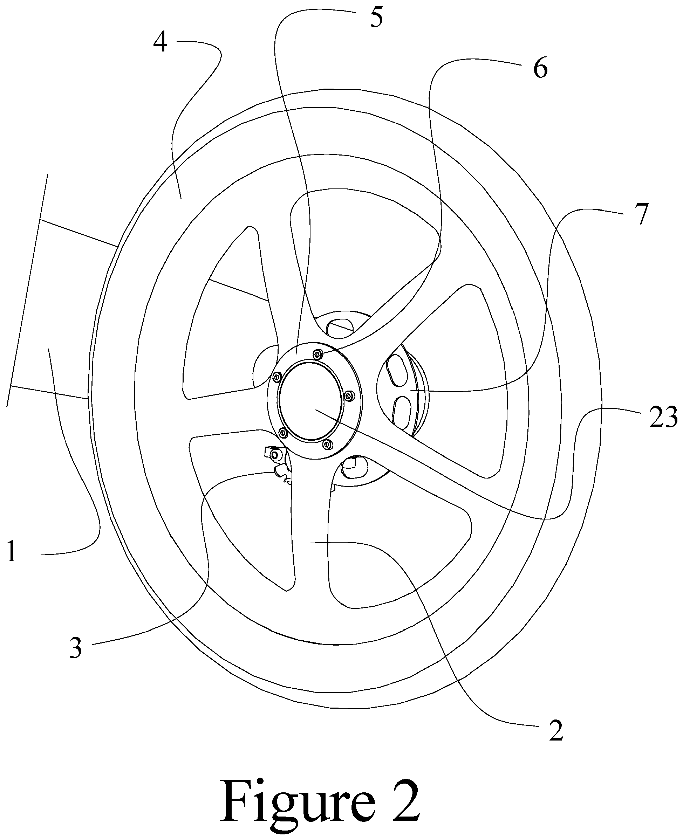

As shown in Figure 2, the bicycle has a rear rotatable wheel hub 23 with a rigidly mounted disk brake rotor 7 interfacing with a brake calliper 3 which is rigidly mounted to the bicycle 1. A tyre 4 is fitted to the cantilevered single side mounted wheel 2 which is mounted to the rear rotatable wheel hub 23 with a plurality of wheel hub collar mounting bolts 6 compressing a wheel hub collar 5 against the cantilevered single side mounted wheel 2 such that it is rigidly attached to the rear rotatable wheel hub 23.

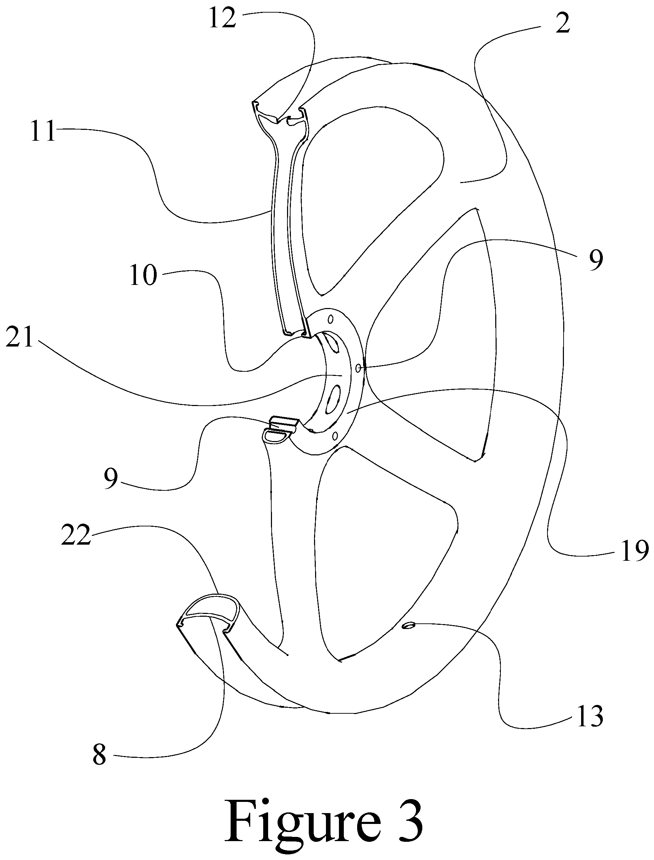

A perspective view of the cantilevered single side mounted wheel 2 is shown in Figure 3 showing a cutaway section through a curved wheel spoke 11, a centre wheel hub 21, and a wheel rim inner profile 22 and a wheel rim tube contact surface 8. The cantilevered single side mounted wheel 2 is of uniform construction and homogenous material throughout.

The nature of the material of the cantilevered single side mounted wheel 2 is ideally of the fibre reinforced plastic variety that can be injected in a heated and liquid form into a mould followed by cooling and solidification. The process of manufacture of the cantilevered single side mounted wheel 2 is of the so-called "lost core" or "soluble core" injection moulding process whereby a solid, usually metal, core is used to form the internal hollow structure during the injection moulding stage and subsequently removed by dissolving the core and flushing or draining it out of the part.

The cantilevered single side mounted wheel 2 is formed with a generally circular and conical centre wheel hub 21 coaxial with the centre of rotation of the cantilevered single side mounted wheel 2 and having a substantially orthogonal and planar wheel hub interface surface 19 which is ideally parallel with the vertical plane of the cantilevered single side mounted wheel 2. The centre wheel hub 21 and wheel hub interface surface 19 could alternatively be combined to form a conical tapered shape.

Through the wheel hub interface surface 19 is a plurality of wheel hub mounting bolt holes 9 for the purpose of attaching the cantilevered single side mounted wheel 2 to the bicycle 1. Within the centre wheel hub 21 a plurality of inner spoke drain holes 10 exist roughly aligned with each curved wheel spoke 11.

The purpose of the inner spoke drain holes 10 is to enable the inner core of the "lost core" manufacturing process to be removed following the solidification of the material of the cantilevered single side mounted wheel 2. The shape of each inner spoke drain hole 10 is roughly round (e.g. circular) or elliptical and of smooth and uniform geometry with minimal sharp edges or corners.

Each curved wheel spoke 11 has a generally hollow "box section" design and is of uniform thickness. Ideally there are five curved wheel spokes 11 in order to reduce material stresses imparted from the curved wheel spokes 11 into the wheel rim inner profile 22, although wheels with other numbers of spokes are also envisaged, such as three or more spokes.

Connected uniformly and with continuous and smooth transition of shape to the curved wheel spokes 11 are the wheel rim inner profile 22 and the wheel rim tube contact surface 8 which form a generally hollow "box section" design able to receive a bicycle tyre and tube. The wheel rim inner profile 22 and wheel rim tube contact surface 8 have a tyre valve stem hole 13 which is able to receive a bicycle tube valve stem for the purpose of inflating the tube and tyre with air.

Roughly aligned with each curved wheel spoke 11, the wheel rim tube contact surface 8 has a plurality of outer spoke drain holes 12. The purpose of the outer spoke drain holes 12 is similar to that of the inner spoke drain holes 10, which is to enable the inner core of the "lost core" manufacturing process to be removed following the solidification of the material of the cantilevered single side mounted wheel 2. The shape of the inner spoke drain holes 10 is roughly round or elliptical and of smooth and uniform geometry with minimal sharp edges or corners.

Although the drain holes 10, 12 are illustrated aligned with the spokes 11, additional drain holes could also be positioned in other locations, for example at the regions between spokes.

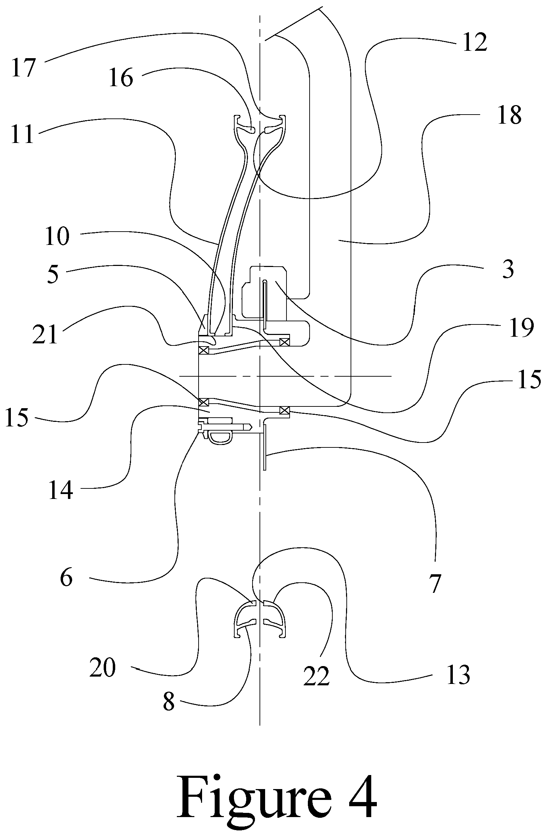

Figure 4 is a vertical cross section view showing a cantilevered single side mounted wheel 2 fitted to a front rotatable wheel hub 14 at the centre wheel hub 21 and a front wheel hub bearing 15 with a plurality of wheel hub collar mounting bolts 6 and a wheel hub collar 5. The purpose of the wheel hub collar 5 is to spread the compression loading from each wheel hub collar mounting bolt 6 evenly across the cantilevered single side mounted wheel 2 in order to reduce material stresses.

The front rotatable wheel hub 14 is rotatably mounted to a front fork shaft assembly 18 which is fitted with a brake calliper 3 that interfaces with a disk brake rotor 7 which is rigidly mounted to the front rotatable wheel hub 14.

Each curved wheel spoke 11 is generally curved and offset from the centreline plane of the 2 in order to allow space for the brake calliper 3. Similarly, the wheel hub interface surface 19 is offset substantially to one side of the centreline plane of the cantilevered single side mounted wheel 2 in order to allow space for the brake calliper 3.

Each outer spoke drain hole 12 is surrounded by an outer spoke drain hole reinforcement region 16 which is generally two times thicker than the nominal thickness of the wheel rim tube contact surface 8. The purpose of the outer spoke drain hole reinforcement region 16 is to reduce material stresses around the front fork shaft assembly 18.

The size and shape of the outer spoke drain hole reinforcement region 16 is generally greater than two times that of the outer spoke drain hole 12 and is blended smoothly into the wheel rim tube contact surface 8.

Similarly, the tyre valve stem hole 13 is surrounded by a tyre valve stem hole reinforcement region 20 which is generally greater than two times thicker than the nominal thickness of the wheel rim tube contact surface 8 and the wheel rim inner profile 22. The purpose of the tyre valve stem hole reinforcement region 20 is to reduce material stresses around the tyre valve stem hole 13.

The size and shape of the tyre valve stem hole reinforcement region 20 is generally greater than two times that of the tyre valve stem hole 13 and is blended smoothly into the wheel rim tube contact surface 8.

The cantilevered single side mounted wheel 2 is formed with a rim tyre profile 17 which is able to receive a standard bicycle tyre and tube.

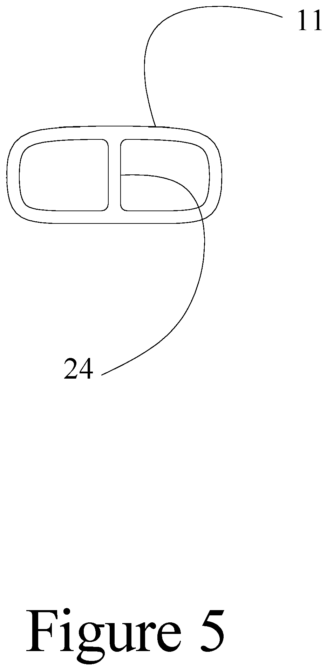

Figure 5 shows a cross section of a spoke 11 having an optional central spar web structure 24. The central spar 24 may run for all or part of the length of the spoke 11 and runs symmetrically within the spoke 11 in a plane perpendicular to the plane defined by the centreline of the outer rim of the wheel 2. The central spar 24 stabilises the spoke 11 during cooling in the moulding process as well as stabilising the outer shape of the spoke 11 in order to raise the lateral stiffness of the wheel 2.

## Claims

1. An injection moulded cantilevered single side mountable wheel (2) for a bicycle (1), comprising:
a rim;
a central hub (23);
a plurality of hollow spokes (11) connecting the rim to the central hub (23); and,
a central spar (24) running symmetrically within each hollow spoke (11) and perpendicular in plane to the plane defined by the centreline of the rim.

2. The wheel (2) of claim 1, wherein the central hub (23) is offset from a plane defined by a centreline of the rim.

3. The wheel (2) of any preceding claim, wherein the rim comprises a hollow cross section.

4. The wheel (2) of any preceding claim, wherein the wheel (2) is arranged to receive a pneumatic tyre.

5. The wheel (2) of any preceding claim, wherein an inner wheel hub surface of the wheel (2) comprises a plurality of inner drain holes (10); optionally, each inner drain hole (10) of the plurality of inner drain holes (10) is aligned with an innermost end of a respective one of the plurality of hollow spokes (11).

6. The wheel of any preceding claim, wherein an outer surface of the rim (23) comprises a plurality of outer drain holes (12); optionally, each outer drain hole (12) of the plurality of outer drain holes (12) is aligned with an outermost end of a respective one of the plurality of hollow spokes (11).

7. The wheel (2) of claim 6, wherein each outer drain hole (12) of the plurality of outer drain holes (12) comprises a surrounding reinforcement region (16); optionally a linear size of the reinforcement region (16) is between 2.0 and 4.0 times larger than a linear size of the respective outer drain hole (12), preferably between 2.0 and 3.0 times larger, most preferably 2.5 times larger.

8. The wheel (2) of claim 6 or claim 7, wherein the outer drain holes (12) are substantially elliptic;
wherein a width of each outer drain hole (12) is between 6 mm and 10 mm, preferably between 7 mm and 9 mm, and most preferably 8 mm; and
wherein a length of each outer drain hole (12) is between 16 mm and 24 mm, preferably between 18 mm and 22 mm, and most preferably 20 mm.

9. The wheel (2) of any preceding claim, further comprising a tyre valve stem hole (13) in the outer surface of the rim configured to receive a tyre valve stem, wherein the tyre valve stem hole (13) comprises a surrounding reinforcement region (20).

10. The wheel (2) of claims 7 or 9 or any claim dependent thereon, wherein each reinforcement region (16, 20) is between 1.5 and 3.0 times thicker than a nominal thickness of the outer surface, preferably between 2.0 and 3.0 times thicker, most preferably 2.5 times thicker.

11. The wheel (2) of claim 10, wherein the nominal thickness of the outer surface is between 1.5 mm and 3.5 mm, preferably between 1.9 mm and 3.1 mm, more preferably between 1.9 mm and 2.1 mm, and most preferably 2.0 mm.

12. The wheel (2) of any preceding claim, wherein the wheel (2) comprises a hub interface surface (19) arranged to abut against a bicycle (1) when the wheel (2) is mounted to the bicycle (1), and wherein the abutment surface (19) is offset from the plane defined by the centreline of the rim; optionally, an axis of each hollow spoke (11) extending along the length of each spoke (11) is curved.

13. The wheel (2) of any preceding claim, wherein a cross sectional area of each hollow spoke (11) decreases smoothly in a direction radially outwardly from the centre of the wheel (2).

14. The wheel (2) of any preceding claim, wherein the wheel (2) is a lost core injection moulded single side mountable wheel (2) or a soluble core injection moulded single side mounted wheel (2).

15. A bicycle (1) comprising the wheel (2) of any preceding claim.

## Patentansprüche

1. Spritzgegossenes, freitragendes, einseitig montierbares Rad (2) für ein Fahrrad (1), umfassend:
eine Felge;
eine zentrale Nabe (23);
eine Vielzahl von hohlen Speichen (11), die die Felge mit der zentralen Nabe (23) verbinden; und
einen zentralen Holm (24), der symmetrisch in jeder hohlen Speiche (11) verläuft und senkrecht zu der durch die Mittellinie der Felge definierten Ebene steht.

2. Rad (2) nach Anspruch 1, wobei die zentrale Nabe (23) gegenüber einer durch die Mittellinie der Felge definierten Ebene versetzt ist.

3. Rad (2) nach einem der vorstehenden Ansprüche, wobei die Felge einen hohlen Querschnitt umfasst.

4. Rad (2) nach einem der vorstehenden Ansprüche, wobei das Rad (2) angeordnet ist, um einen Luftreifen zu empfangen.

5. Rad (2) nach einem der vorstehenden Ansprüche, wobei eine innere Radnabenoberfläche des Rads (2) eine Vielzahl von inneren Ablauflöchern (10) umfasst; optional ist jedes innere Ablaufloch (10) der Vielzahl von inneren Ablauflöchern (10) mit einem innersten Ende einer jeweiligen der Vielzahl von hohlen Speichen (11) ausgerichtet.

6. Rad nach einem der vorstehenden Ansprüche, wobei eine Außenoberfläche der Felge (23) eine Vielzahl von äußeren Ablauflöchern (12) umfasst; optional ist jedes äußere Ablaufloch (12) der Vielzahl von äußeren Ablauflöchern (12) mit einem äußersten Ende einer entsprechenden der Vielzahl von hohlen Speichen (11) ausgerichtet.

7. Rad (2) nach Anspruch 6, wobei jedes äußere Ablaufloch (12) der Vielzahl von äußeren Ablauflöchern (12) eine umgebende Verstärkungsregion (16) umfasst; optional ist eine lineare Größe der Verstärkungsregion (16) zwischen 2,0 und 4,0 mal größer als eine lineare Größe des jeweiligen äußeren Ablauflochs (12), vorzugsweise zwischen 2,0 und 3,0 mal größer, am meisten bevorzugt 2,5 mal größer.

8. Rad (2) nach Anspruch 6 oder 7, wobei die äußeren Ablauflöcher (12) im Wesentlichen elliptisch sind;
wobei eine Breite jedes äußeren Abflusslochs (12) zwischen 6 mm und 10 mm, vorzugsweise zwischen 7 mm und 9 mm, und am meisten bevorzugt 8 mm beträgt; und
wobei eine Länge jedes äußeren Abflusslochs (12) zwischen 16 mm und 24 mm, vorzugsweise zwischen 18 mm und 22 mm, und am meisten bevorzugt 20 mm beträgt.

9. Rad (2) nach einem der vorstehenden Ansprüche, ferner umfassend ein Reifenventilschaftloch (13) in der Außenoberfläche der Felge, das konfiguriert ist, um einen Reifenventilschaft zu empfangen, wobei das Reifenventilschaftloch (13) eine umgebende Verstärkungsregion (20) umfasst.

10. Rad (2) nach Anspruch 7 oder 9 oder einem davon abhängigen Anspruch, wobei jede Verstärkungsregion (16, 20) zwischen 1,5 und 3,0 mal dicker ist als die Nenndicke der Außenoberfläche, vorzugsweise zwischen 2,0 und 3,0 mal dicker, am meisten bevorzugt 2,5 mal dicker.

11. Rad (2) nach Anspruch 10, wobei die Nenndicke der Außenoberfläche zwischen 1,5 mm und 3,5 mm, vorzugsweise zwischen 1,9 mm und 3,1 mm, noch bevorzugter zwischen 1,9 mm und 2,1 mm und am meisten bevorzugt 2,0 mm beträgt.

12. Rad (2) nach einem der vorstehenden Ansprüche, wobei das Rad (2) eine Nabenschnittstellenoberfläche (19) umfasst, die angeordnet ist, um an einem Fahrrad (1) anzuliegen, wenn das Rad (2) an dem Fahrrad (1) montiert ist, und wobei die Anlageoberfläche (19) von der durch die Mittellinie der Felge definierten Ebene versetzt ist; optional ist eine Achse jeder hohlen Speiche (11), die sich entlang der Länge jeder Speiche (11) erstreckt, gekrümmt.

13. Rad (2) nach einem der vorstehenden Ansprüche, wobei der Querschnittsbereich jeder hohlen Speiche (11) in einer Richtung radial nach außen von der Mitte des Rades (2) gleichmäßig abnimmt.

14. Rad (2) nach einem der vorstehenden Ansprüche, wobei das Rad (2) ein einseitig montierbares Rad (2) mit verlorenem Kern oder ein einseitig montiertes Rad (2) mit löslichem Kern ist.

15. Fahrrad (1), umfassend das Rad (2) nach einem der vorstehenden Ansprüche.

## Revendications

1. Roue en porte-à-faux moulée pouvant être montée d'un seul côté par injection (2) pour une bicyclette (1), comprenant :
une jante ;
un moyeu central (23) ;
une pluralité de rayons creux (11) reliant la jante au moyeu central (23) ; et,
un longeron central (24) s'étendant symétriquement à l'intérieur de chaque rayon creux (11) et étant perpendiculaire, dans le plan, au plan défini par l'axe central de la jante.

2. Roue (2) selon la revendication 1, dans laquelle le moyeu central (23) est décalé par rapport à un plan défini par un axe central de la jante.

3. Roue (2) selon une quelconque revendication précédente, dans laquelle la jante comprend une section transversale creuse.

4. Roue (2) selon une quelconque revendication précédente, dans laquelle la roue (2) est agencée pour recevoir un pneumatique.

5. Roue (2) selon une quelconque revendication précédente, dans laquelle une surface de moyeu de roue intérieure de la roue (2) comprend une pluralité de trous de drainage intérieurs (10) ; éventuellement, chaque trou de drainage intérieur (10) de la pluralité de trous de drainage intérieurs (10) est aligné avec une extrémité la plus intérieure d'un rayon respectif de la pluralité de rayons creux (11).

6. Roue selon une quelconque revendication précédente, dans laquelle une surface extérieure de la jante (23) comprend une pluralité de trous de drainage extérieurs (12) ; éventuellement, chaque trou de drainage extérieur (12) de la pluralité de trous de drainage extérieurs (12) est aligné avec une extrémité la plus extérieure d'un rayon respectif de la pluralité de rayons creux (11).

7. Roue (2) selon la revendication 6, dans laquelle chaque trou de drainage extérieur (12) de la pluralité de trous de drainage extérieurs (12) comprend une région de renforcement environnante (16) ; éventuellement, une taille linéaire de la région de renforcement (16) est entre 2,0 et 4,0 fois plus grande qu'une taille linéaire du trou de drainage extérieur (12) respectif, de préférence entre 2,0 et 3,0 fois plus grande, de manière davantage préférée entre toutes 2,5 fois plus grande.

8. Roue (2) selon la revendication 6 ou la revendication 7, dans laquelle les trous de drainage extérieurs (12) sont sensiblement elliptiques ;
dans laquelle une largeur de chaque trou de drainage extérieur (12) est comprise entre 6 mm et 10 mm, de préférence entre 7 mm et 9 mm, et de manière davantage préférée entre toutes encore 8 mm ; et
dans laquelle une longueur de chaque trou de drainage extérieur (12) est comprise entre 16 mm et 24 mm, de préférence entre 18 mm et 22 mm, et de manière davantage préférée entre toutes 20 **mm.**

9. Roue (2) selon une quelconque revendication précédente, comprenant en outre un trou de tige de valve de pneumatique (13) dans la surface extérieure de la jante configuré pour recevoir une tige de valve de pneumatique, dans laquelle le trou de tige de valve de pneumatique (13) comprend une région de renforcement environnante (20).

10. Roue (2) selon les revendications 7 ou 9 ou une quelconque revendication dépendant de celles-ci, dans laquelle chaque région de renforcement (16, 20) est entre 1,5 et 3,0 fois plus épaisse qu'une épaisseur nominale de la surface extérieure, de préférence entre 2,0 et 3,0 fois plus épaisse, de manière davantage préférée entre toutes encore 2,5 fois plus épaisse.

11. Roue (2) selon la revendication 10, dans laquelle l'épaisseur nominale de la surface extérieure est comprise entre 1,5 mm et 3,5 mm, de préférence entre 1,9 mm et 3,1 mm, de manière davantage préférée entre 1,9 mm et 2,1 mm, et de manière davantage préférée entre toutes de 2,0 mm.

12. Roue (2) selon une quelconque revendication précédente, dans laquelle la roue (2) comprend une surface d'interface de moyeu (19) agencée pour venir en butée contre une bicyclette (1) lorsque la roue (2) est montée sur la bicyclette (1), et dans laquelle la surface de butée (19) est décalée par rapport au plan défini par l'axe central de la jante ; éventuellement, un axe de chaque rayon creux (11) s'étendant le long de la longueur de chaque rayon (11) est courbé.

13. Roue (2) selon une quelconque revendication précédente, dans laquelle une section transversale de chaque rayon creux (11) diminue progressivement dans une direction radialement vers l'extérieur à partir du centre de la roue (2).

14. Roue (2) selon une quelconque revendication précédente, dans laquelle la roue (2) est une roue moulée pouvant être montée d'un seul côté par injection à noyau sacrificiel (2) ou une roue moulée montée d'un seul côté par injection à noyau soluble (2).

15. Bicyclette (1) comprenant la roue (2) selon une quelconque revendication précédente.
